# NEUE EUROPÄISCHE PATENTSCHRIFT

(11) **EP 0 360 176 B2**
(45) Veröffentlichungstag und Bekanntmachung des Hinweises auf die Entscheidung über den Einspruch: **08.08.2001**
(45) Hinweis auf die Patenterteilung: 10.08.1994
(21) Anmeldenummer: 89117163.9
(22) Anmeldetag: 16.09.1989
(51) Int. Cl.: G02B 6/30

(54) **Optisches Wellenleitermodul mit Faserankopplung**
Optical wave guide module with a fibre coupling
Module optique de guide d'onde accouplé à des fibres optiques

(30) Priorität: 20.09.1988 DE 3831905
(43) Veröffentlichungstag der Anmeldung: 28.03.1990
(73) Patentinhaber: Alcatel SEL Aktiengesellschaft, 70435 Stuttgart (DE)
(72) Erfinder: Regener, Rolf, Dr., D-7060 Schorndorf (DE); Scholz, Joachim, D-7242 Marbach (DE)
(74) Vertreter: Knecht, Ulrich Karl, Dipl.-Ing.

(56) Entgegenhaltungen:
- EP-A- 0 187 467
- EP-A- 0 276 599
- GB-A- 2 184 255
- US-A- 4 796 975
- US-A- 4 865 413
- PATENT ABSTRACTS OF JAPAN, Band 9, Nr. 3 (P-362)[1856], 8. Juni 1985 ; & JP-A-60 17 406
- Proceedings SPIE, Vol. 993, Integrated Optics Circuit Engineering VI(1988), Boston (Mass., USA) 7.-9. Sept. 1988, A. 264-270
- IS. Ezekiel & H.J. Arditty, Fiber-Optic Rotation Sensors, Springer-Verlag Heidelberg, New York 1982, S. 124-129

## Beschreibung

Die Erfindung betrifft ein optisches Wellenleitermodul der im Oberbegriff des Anspruchs 1 näher bezeichneten Ausführung.

Derartige Module sind beispielsweise aus der GB-A-2 184 255 bekannt und werden allgemein als Sensoren und für die optische Nachrichten-Übertragungstechnik und Sensortechnik verwendet. Sie bestehen aus planaren Strukturen, bei denen ein Trägersubstrat mit integrierter optischer Schaltung z.B. als Phasenmodulator, Strahlteiler, Mach-Zehnderinterferometer etc. realisiert ist.

In der Druckschrift "JOURNAL OF LIGHTWA-VE TECHNOLOGY, Band 6, Nr. 6, vom Juni 1988, Seiten 862 bis 871 sind unter dem Titel "Fiber Attachment for Guided Wave Devices" Wellenleitermodule mit verschiedenen Ausführungsbeispielen von Faserankopplungen und die Schwierigkeiten der Herstellung beschrieben. Danach wird bei der Ankopplung von Einzelfasern die Dicke des Trägersubstrates mittels einer aufgeklebten Leiste verstärkt und das Faserende stumpf an die Außenseite von Substrat und Leiste geklebt. Zur Verstärkung der mechanischen Festigkeit kann das Faserende zuvor in ein Röhrchen oder einen passenden Uhrenlagerstein eingeklebt werden. Für die Ankopplung polarisationserhaltender Fasern ist diese Fixierungsart jedoch nicht geeignet, weil beispielsweise das Trägersubstrat aus Lithiumniobat, das Röhrchen aus Metall und das Faserende aus Quarzglas bestehen und diese Werkstoffe voneinander abweichende Ausdehnungskoeffizienten haben, die bei Temperaturschwankungen die Polarisation der Lichtwellen in der Glasfaser in unerwünschter Weise beeinflussen oder zerstören.

Bei dem beschriebenen Beispiel der Ankopplung von mehreren polarisationserhaltenden Glasfasern werden die Faserenden zwischen einem genuteten Siliziumplättchen und einem die Nuten abdeckenden Glasplättchen fixiert und die Anordnung an die Außenseite des wieder mittels einer Leiste im Anschlußbereich mechanisch verstärkten Trägersubstrates geklebt. Die für den Gruppenanschluß von Glasfasern konzipierte Faserankopplung ist in der Herstellung relativ teuer und für die Ankopplung von Einzelfasern weniger geeignet. Das Erzeugen der Nut im Siliziumplättchen geschieht durch anisotropes Ätzen, das verhältnismäßig zeitaufwendig ist. Außerdem ist Silizium wegen seiner kristallinen Struktur recht brüchig, erfordert deshalb in der Fertigung bei der Handhabung besondere Sorgfalt und benötigt zur Erhöhung der Stabilität die mechanische Verstärkung durch das Glasplättchen. Die gruppenweise Faserankopplung setzt eine sehr gute Zentrierung des Faserkerns bezuglich des Fasermantels voraus. Vor allem polarisationserhaltende Fasern für Wellenlängen < 1*µ*m erfüllen diese Bedingungen nicht.

Der Erfindung liegt die Aufgabe zugrunde, bei einem optischen Wellenleitermodul der eingangs erläuterten Art die optischen Übertragungseigenschaften der Faserankopplung zu verbessern. Diese Aufgabe wird erfindungsgemäß durch die im Anspurch angegebenen konstruktiven Maßnahmen gelöst. Ausgestaltungen der Faserankopplung des Wellenleitermoduls sind den Unteransprüchen zu entnehmen. Mit der Erfindung erzielbare Vorteile sind in der Beschreibung genannt.

Die Erfindung wird anhand eines in einer Zeichnung dargestellten Ausführungsbeispieles wie folgt näher erläutert. In der Zeichnung zeigen:
- Fig. 1: ein optisches Wellenleitermodul mit Faserankopplung, in der Draufsicht;
- Fig. 2: das Wellenleitermodui der Fig. 1, in einer Seitenansicht;
- Fig. 3: das schematisch dargestellte Wellenleitermodul der Fig. 1, mit Blick auf die Einkoppelseite der Faserankopplung:
- Fig. 4: das schematisch dargestellte Wellenleitermodul der Fig. 1, mit Blick auf die Auskoppelseite der Faserankopplung.

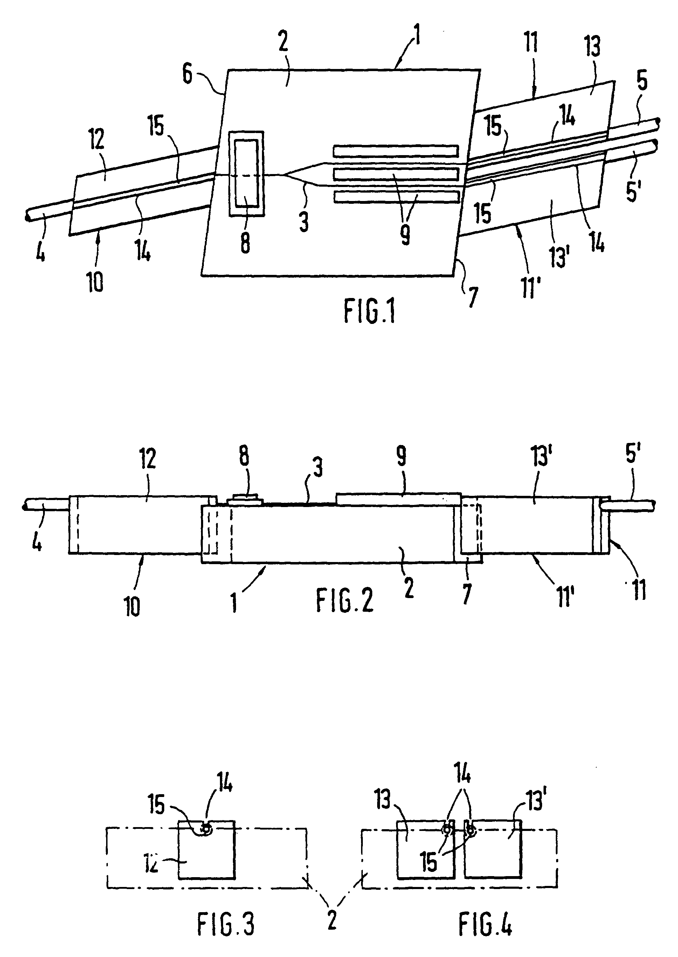

In den Fig. 1 bis 4 ist das Wellenleitermodulim folgenden kurz Modul genannt - allgemein mit 1 bezeichnet. Es besteht im wesentlichen aus einem Substratträger 2 mit wenigstens einem integrierten Lichtwellenleiter 3, an dessen Enden je eine optische Faser-Anschlußleitung 4, 5, 5' gekoppelt ist. Je nach Verwendungszweck und Einsatzort ist das Modul 1 in einem Gehäuse mechanisch geschützt untergebracht, das in Abhängigkeit von möglichen Umgebungseinflüssen gasdicht verschlossen sein kann (nicht dargestellt).

Bei dem vorliegenden Ausführungsbeispiel des Moduls 1 ist der Wellenleiter 3 als Strahlteiler mit Y-Verzweigung ausgebildet, welcher an der Einkoppelseite 6 des Moduls 1 einbahnig beginnt, an der Auskoppelseite 7 zweibahnig endet und dabei einen integrierten Polarisator 8 und einen integrierten Phasenmodulator 9 passiert.

Die Faserankopplungen 10, 11, 11' auf der Einund Auskoppelseite 6, 7 des Moduls 1 bestehen jeweils aus einem leistenförmigen Trägerkörper 12, 13, 13' mit einer auf der Oberseite eingeschnittenen und sich in Richtung Längsachse erstreckenden Nut 14. In jede Nut 14 ist ein von der äußeren Umhüllung und dem Primärcoating befreites Faserende 15 der entsprechenden Anschlußleitung 4, 5, 5' mit Kleber fixiert. Bei den Faserenden 15 handelt es sich z.B. um polarisationserhaltende Monomodefasern aus Quarzglas, die beispielsweise einen Manteldurchmesser von 85 µm haben. Aus diesem Grunde beträgt die Breite der Nut 14 im Trägerkörper 12, 13, 13' z.B. 100 µm und die Tiefe zur vollständig versenkten Aufnahme des Faserendes 15 und einer ausreichenden Klebermenge 150 µm bis 200 µm.

Die Trägerkörper werden in vorteilhafter Weise aus handelsüblichen Quarzglassubstraten optischer Qualität hergestellt, die sich im Gegensatz zu Silizium gut polieren lassen. Diese Substrate haben Abmessungen von 50x50x1 mm aus denen z.B. 1 mm breite, 1 mm dicke und 4 mm lange Streifen geschnitten und mit Nuten versehen werden. Bei dem vorliegenden Ausführungsbeispiel weisen die Trägerkörper 12, 13, 13' einen quadratischen Querschnitt auf. Sie können jedoch auch einen rechtekkigen Querschnitt haben; die Nuten 14 sind dann an einer der schmalen Längsseiten angeordnet. Um unerwünschte Rückreflexionen von Lichtwellen zu vermeiden, können die Stirnseiten der Glaskörper in einem vorgegebenen Winkel zur Faserachse angeordnet sein, der in Abhängigkeit von den zur Wellenleiter-Längsachse des Substratträgers 2 winklig angeordneten Ein- und Auskoppelseiten 6, 7 bestimmt wird.

Wie die Fig. 3 zeigt, ist das mit dem Lichtwellenleiter 3 des Substratträgers 2 auf der Einkoppeiseite 6 zu verbindende Faserende 15 in eine Nut 14 eingebettet, die im Trägerkörper 12 mittig angeordnet ist. Auf die genaue Lage der Nut 14 kommt es hier jedoch nicht an, weil für das Justieren des Faserendes 15 auf den Lichtwellenleiter 3 genügend Freiraum vorhanden ist.

In Fig. 4 sind zwei Faserankopplungen 11, 11' dargestellt, die für die Befestigung an der Auskoppelseite 7 des Substratträgers 2 vorgesehen sind. Die Trägerkörper 13, 13' enthalten Nuten 14, die sich in geringem Abstand parallel neben einer Außenkante erstrecken und zwar an Außenkanten von den in Einbaulage sich zugekehrten Längsseiten der Trägerkörper. Der Abstand der Nuten 14 zueinander ist abhängig von dem der Lichtwellenleiter 3 des Substratträgers 2, welcher hier beispielsweise 450 um beträgt. Daher ist bei den Trägerkörpern 13, 13' ein Nutenabstand von ca. 50 µm zur Außenkante ausreichend, um ein individuelles Justieren der Faserenden 15 auf den entsprechenden Lichtwellenleiterausgang und anschließendes Fixieren der Trägerkörper 13, 13' zu gewährleisten, obwohl auch die Anordnung in noch kleineren Abständen wie z.B. 20 µm möglich ist.

Um die Polarisationserhaltung der Faserankopplung 10, 11, 11' zu erreichen, wird zur Anfertigung der Trägerkörper 12, 13, 13' ein Ausgangsmaterial gewählt, das einen dem Faserende 15 der Faser-Anschlußleitung 4, 5, 5' angepaßten Ausdehnungskoeffizienten hat, also möglichst aus dem selben Material wie das Faserende besteht. Außerdem werden die Stirnflächen von Trägerkörpern und eingebetteten Faserenden zusammen poliert, wodurch sie eine relativ große ebene Fläche erhalten, mit der sie mechanisch stabil und streßfrei an die entsprechend polierten Seiten des Substratträgers 2 geklebt sind. Natürlich können die beschriebenen Trägerkörper auch zur Halterung und Ankopplung von anderen optischen Fasern, wie z.B. Multimode-, oder anderen Monomodefasern aus Quarzglas verwendet werden.

## Patentansprüche

1. Optisches Wellenleitermodul (1) in IOC-Bauweise mit Faserankopplung (10, 11, 11'), das aus einem Trägersubstrat (2) mit wenigstens einem Lichtwellenleiter (3) besteht, dessen Enden auf zwei Seiten des Trägersubstrates (2) an je eine optische Anschlußleitung (4, 5, 5') gekoppelt sind, wobei die Anchlußleitungen (4, 5, 5') mit vom Primärcoating befreiten Faserenden (15) in je einer Nut (14) einer separaten, bezüglich des Trägersubstrates (2) justierten und daran befestigten, aus je einem leistenförmigen Trägerkörper (12, 13, 13') bestehenden Halterung mit einem Kleber fixiert sind,
**dadurch gekennzeichnet**, daß die Nuten (14) aufderOberseitein Richtung der Längsachse der Trägerkörper (12, 13, 13') eingeschnitten sind und daß die Faserenden (15) und die leistenförmigen Trägerkörper (12, 13, 13') aus Quarzglas mit einem einander angepaßten Ausdehnungskoeffizienten bestehen.

2. Optisches Wellenleitermodul (1) nach Anspruch 1, dadurch gekennzeichnet, daß bei zwei dicht nebeneinander endenden Lichtwellenleitern (3) des Trägersubstrates (2) zwei, den Enden der Lichtwellenleiter zugeordnete Trägerkörper vorhanden sind, und daß die Nuten (14) der Trägerkörper (13, 13') sich jeweils auf der Oberseite in einem geringen Abstand von ca. 50 *µ*m oder kleiner parallel neben der Außenkante der einander zugekehrten Längsseiten der Trägerkörper (13, 13') erstrecken.

3. Optisches Wellenleitermodul (1) nach Anspruch 1 oder 2, dadurch gekennzeichnet, daß die Stirnseiten der Trägerkörper (12, 13, 13') zur Vermeidung von Rückreflexionen in je einem vorgegebenen Winkel zur Faserachse (Faserende 15) angeordnet sind.

## Claims

1. An integrated optical waveguide module (1) with fiber coupling (10, 11, 11') comprising a substrate (2) with at least one optical waveguide (3) whose ends are coupled, at two sides of the substrate (2), to respective optical fibers (4, 5, 5') which are fixed with an adhesive in respective grooves (14) of respective separate holders adjusted in relation to and attached to the substrate (2) and each constituted by a fillet-shaped supporting body (12, 13, 13'),
**characterized in** that the grooves (14) are formed on the upper sides in the direction of the longitudinal axes of the supporting bodies (12, 13, 13'), and that the fiber ends (15) and the fillet-shaped supporting bodies (12, 13, 13') are made of quartz glass with matched coefficients of expansion.

2. An optical waveguide module (1) as claimed in claim 1, characterized in that, if two optical waveguides (3) on the substrate (2) end close to one another, two supporting bodies associated with the ends of the optical waveguides are provided, and that the grooves (14) on the upper sides of the supporting bodies (13, 13') extend parallel to and at a short distance of approx. 50 *µ*m or less from the outside edges of the facing long sides of the supporting bodies (13, 13').

3. An optical waveguide module (1) as claimed in claim 1 or 2, characterized in that the ends of the supporting bodies (12, 13, 13') make a predetermined angle with the fiber axis (fiber end 15) to avoid back reflections.

## Revendications

1. Module optique (1) guide d'ondes construit en circuit optique intégré IOC, avec un coupleur de fibres (10, 11, 11') qui est constitué d'un substrat support (2) avec au moins un guide (3) d'ondes lumineuses, dont les extrémités sont couplées, des deux côtés du substrat support (2) à, chacune, une ligne de rattachement optique (4, 5, 5'), les lignes de rattachement (4, 5, 5') étant fixées avec une colle aux extrémités de fibre (15), libérées du revêtement primaire, dans chaque rainure (14) d'un appui distinct, ajusté par rapport au substrat support (2), fixé à ce dernier et composé chacun d'un corps support (12, 13, 13') en forme de tige,
caractérisé par le fait que les rainures (14) sont découpées sur la face supérieure selon la direction de l'axe longitudinal des corps supports (12, 13, 13') et que les corps supports (12, 13, 13') en forme de tige sont constitués de verre en quartz de coefficients de dilatation adaptés l'un à l'autre.

2. Module optique (1) guide d'ondes selon la revendication 1, caractérisé par le fait que, dans le cas de deux guides d'ondes lumineuses (3) du substrat support (2) se terminant très près l'un de l'autre, sont prévus deux corps supports correspondant aux extrémités de guides d'ondes lumineuses et que les rainures (14) des corps supports (13, 13') s'étendent chacune sur la face supérieure, à faible distance d'environ 50 µm ou moins, parallèlement l'une à l'autre, à côté de l'arête extérieure des côtés longitudinaux, orientés l'un vers l'autre, des corps supports (13, 13').

3. Module optique (1) guide d'ondes selon la revendication 1 ou 2,
caractérisé par le fait que, pour éviter les rétroréflexions, les faces frontales du corps support (12, 13, 13') sont chacune disposée sous un angle prescrit par rapport à l'axe de la fibre (extrémité de fibre 15).
